# EUROPEAN PATENT APPLICATION

(11) **EP 0 885 779 A2**
(43) Date of publication of application: **23.12.1998**
(21) Application number: 98110595.0
(22) Date of filing: 09.06.1998
(51) Int. Cl.: B60R 16/02

(54) **Improved elektromechanic device for sectioning the battery of a motor vehicle**

(30) Priority: 12.06.1997 IT MI971396
(71) Applicant: Sylea Italia S.r.l., 15023 Felizzano (Alessandria) (IT)
(72) Inventor: Colombo, Paolo, c/o Sylea Italia s.r.l., 15023 Felizzano (Alessandria) (IT); Crovato, Rossella, c/o Sylea Italia s.r.l., 15023 Felizzano (Alessandria) (IT)
(74) Representative: Cicogna, Franco

(57) **Abstract**

The invention relates to a battery sectioning device, controlled by an inertial device, and related fuses for protecting it from shorts, which can be directly assembled on the battery and is characterized in that it comprises a double inner contact as well as two switches which can be operated by the user: the first switch being adapted either to select a normal operation, the privileged loads exclusively, or fully section the battery in order to prevent it from being discharged in the case of a prolonged standby; the second switch being adapted to allow the device to be manually disengaged.

## Description

### BACKGROUND OF THE INVENTION

The present invention relates to an improved electromechanic device for sectioning the battery of a motor vehicle.

More specifically, the invention relates to such a device which can be applied to batteries of motor vehicles, such as cars, lorries, trucks and the like.

As is known, road accidents are frequently associated with a great risk of causing fires, due to the provision on the affected motor vehicles of live electric circuits. Thus, it would be advantageous to provide a safety switching-off device, between the motor vehicle battery and power supply circuit, specifically designed for causing the power supply circuit to be switched off upon a violent impact, deriving, for example, from a road accident.

On the other hand, in a road accident event, it would be also advantageous to allow the safety services conventionally provided on modern motor vehicles, such as door locking devices, inner lights, emergency lamps and the like to continue to operate.

### SUMMARY OF THE INVENTION

Accordingly, the aim of the present invention is to provide an electromechanic device adapted to automatically switch off the current of the main electric system of the motor vehicle in the case of an accident, while holding the safety electric services or the emergency services on the motor vehicle in an operating condition.

Within the scope of the above mentioned aim, a main object of the present invention is to provide such a device allowing to section off, by a manual operation, the overall electric system of the motor vehicle, while preserving the motor vehicle battery in a full operating charged condition upon prolonged standby periods.

According to one aspect of the present invention, the above mentioned aim and objects are achieved by the inventive electromechanic device for sectioning the power supply lines coming from the battery of a motor vehicle, characterized in that said device comprises at least a first contact, adapted to close a first portion of the electric circuit power supplying the main electric system of said motor vehicle, and a second contact, adapted to close a second circuit portion power supplying privileged loads of said motor vehicle, said device further comprising means for opening said first contact, in order to exclusively select said privileged loads.

According to a preferred embodiment of the present invention, said contacts are coupled to a rod including means for separating said contacts from their respective power supply circuit portions.

Said rod, moreover, can be axially driven by a plurality of springs, and is held in a position allowing the closure of both the circuit portions by a groove, formed in said rod, in which an end portion of the movable core of an electromagnet is engaged, and by a recess, in which an end portion of a first manually operated switch is engaged.

According to a further embodiment of the present invention, said end portion of said movable core is disengaged from said groove by an inertial switch which, upon an accidental impact, would allow the electromagnet to be energized to actuate said movable core to allow said rod to be partially driven as well as said first contact to be removed from said first circuit portion.

The driving of the rod will be interrupted by a portion of said recess engaging with an end of a first manually operated switch.

Furthermore, said first switch can be driven in order to disengage the ends thereof to allow said rod to be further driven for disengaging the second contact from the second circuit portion.

Alternately, said first switch can be used for manually sectioning the overall circuit.

According to another preferred embodiment of the invention, a manually operated second switch for partially or fully closing the circuit is moreover provided.

The device according to the invention provides at first the advantage that it allows the main electric system of the motor vehicle to be automatically switched off, with a consequent reduction of possible fire dangers deriving from a continuously energized or power supplied electric system.

Secondly, the provision of the two manually operated switches allows the user to fully switch-off the circuit, as the battery charge must be preserved, or to manually re-energize it again.

Finally, the device according to the invention can be suitably assembled on the motor vehicle battery itself.

### BRIEF DESCRIPTION OF THE DRAWINGS

The device according to the invention will be disclosed hereinafter, by way of an illustrative but not limitative example, with reference to the accompanying drawings, where:
Figure 1 illustrates an electric diagram of the device according to the present invention, and clearly shows the electrical connections between the motor vehicle battery and the loads power supplied thereby;
Figure 2 is a top plan view illustrating the top portion of the outer housing of the device according to the invention;
Figure 3 illustrates a like top plan view of the bottom portion of the outer housing or casing of the device;
Figure 4 is a further top plan view illustrating the inside of the device according to the invention;
   and
Figures 5.a, 5.b and 5.c illustrates the configuration assumed by the contacts of the subject device, respectively in a closed circuit condition, in a privileged load closed circuit condition, and a main electric system open condition, respectively, as well as with both said circuit in an open condition.

### DESCRIPTION OF THE PREFERRED EMBODIMENTS

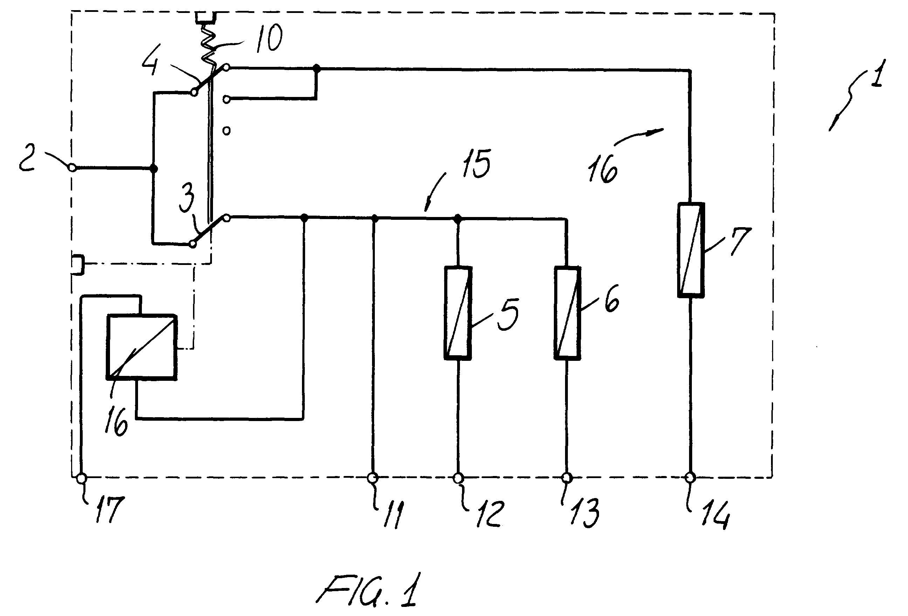

Figure 1 illustrates an electric diagram of the electromechanic device according to the invention, which is provided for being directly assembled on the motor vehicle battery and being coupled to the positive post of said battery by the clamp 2.

Figure 1 clearly shows that the circuit, generally indicated by the reference number 1, is in turn subdivided into a first circuit portion 15 and a second circuit portion 16.

The first circuit portion 15 power supplies the main electric system of the motor vehicle, whereas the second circuit portion 16 power supplies the so-called "privileged" loads of the motor vehicle, such as the emergency lamps, the inner lamps or lights, the motor vehicle door locking devices or elements, and so on. The circuit 1 is moreover provided with a first contact 3 and a second contact 4 coupled by a coupling rod 60 driven by a system of springs, generally indicated by the reference number 10, and which will be disclosed in a more detailed manner hereinafter.

With the circuit 1 an electromagnet 16 is moreover connected, said electromagnet 16 being driven by an inertial switch 17, to be suitably connected to the input 17 of the device.

The ordinary loads of the motor vehicle electric system are coupled to the outputs 12 and 13 and are protected by two fuses 5 and 6 and being controlled by the first contact 3, together with the line 11 specifically provided for power supplying the motor vehicle starting circuit. The privileged loads, in turn, are coupled to the output 14 and are protected by the fuse 7 and controlled by the second contact 4. All the inner and power electric connections are preferably made by copper sheared connections.

From the examination of the electric diagram of figure 1 it should be apparent that the circuit 1 can have one of the following configurations or operating modes: a first configuration in which both the first circuit portion 15 and second circuit portion 16 are coupled to the battery, a second configuration in which only the second circuit position 16 is coupled to the battery and a third configuration in which the circuit 1 is sectioned from the battery.

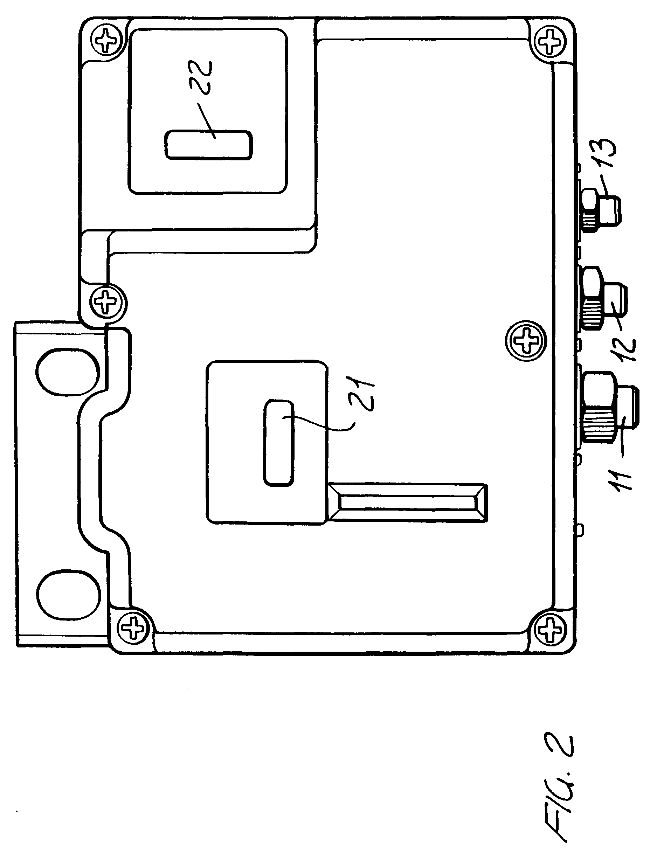

Figure 2 illustrates a top plan view of the top portion of the housing or casing of the device according to the invention. This figure, in particular, clearly shows a first manually operated switch 21 and a second manually operated switch 22, the functions of which will be disclosed in a more detailed manner hereinafter.

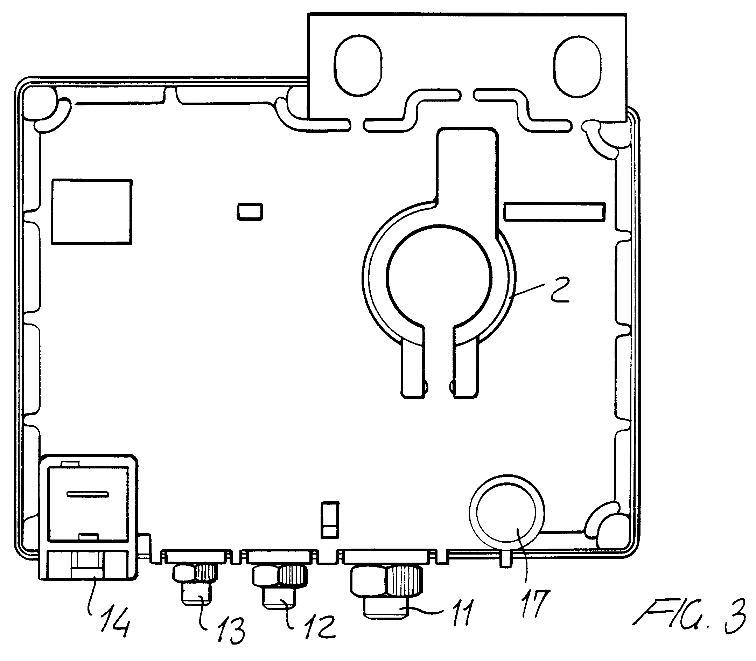

Figure 3 illustrates a top plan view of the bottom portion of the casing of the device according to the invention. In particular, this figure clearly shows the attachment of the clamp 2 by means of which the device is coupled to the positive post of the battery (not shown).

The outputs 11, 12, 13, 14 and input 17 are moreover shown.

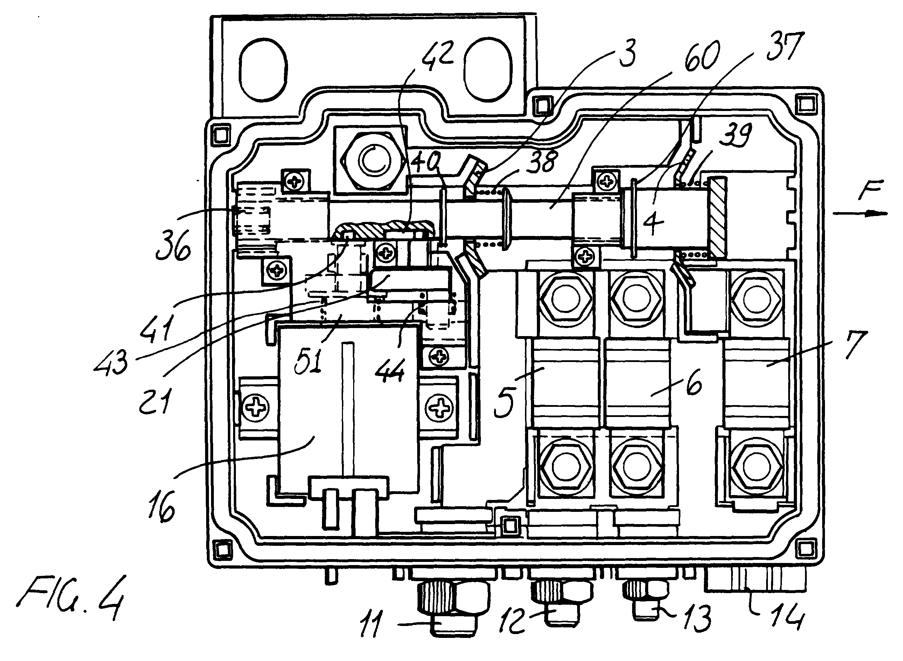

Figure 4 is a top plan view illustrating the inside of the inventive device. In particular, it can be seen that the electric contacts 3 and 4 are coupled to a coupling rod 60, which can be driven in the direction of the arrow "F" under the control of a first spring 36, a second spring 38 and a third spring 39.

Said coupling rod is moreover provided with a first edge 37 and a second edge 40, both said first and second edges 37, 40 being adapted to be engaged, through the springs 38 and 39, with the contacts 3 and 4, in order to separate said contacts from the respective portions of the power supply circuit 1.

Figure 4 shows moreover, by a partial cross section, a groove 41 and a recess 42 formed in said coupling rod 60. In said groove 41 is engaged, under the urging of a related spring, an end portion of a movable core 51 pertaining to the electromagnet 16, whereas in the recess 42 is engaged one end portion of a first switch 21 which is held engaged with said rod 60 by a manually operated spring 44.

In that figure are moreover clearly shown the fuses 5, 6 and 7 as well as the outputs 11, 12, 13 and 14.

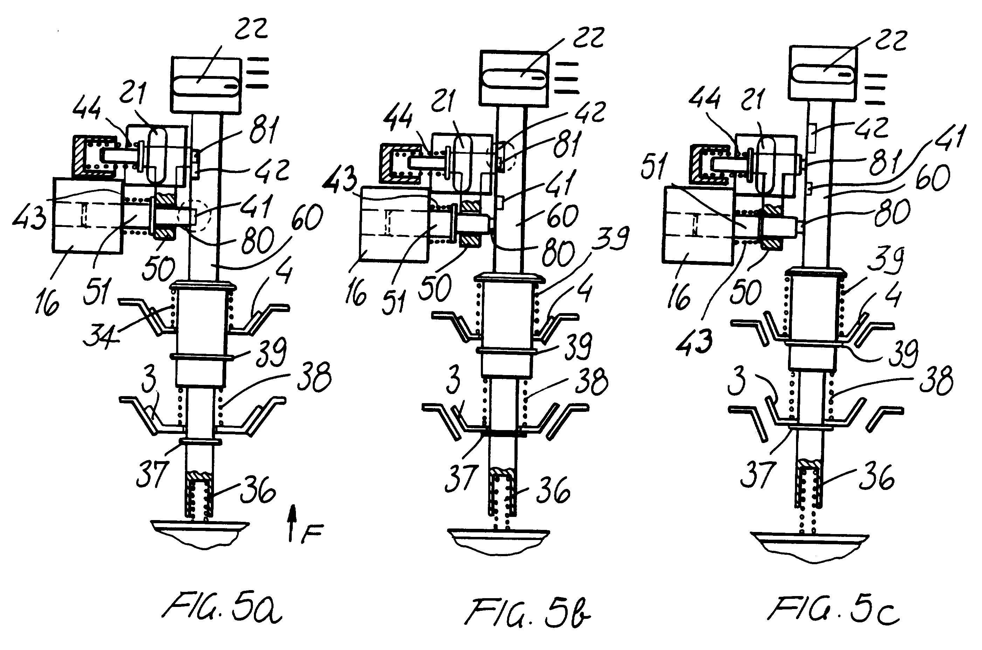

Figure 5.a schematically illustrates the electromechanic device according to the invention in the operation mode thereof in which both said contacts close the respective circuit portions. In this figure it can be seen that the coupling rod 60 is provided with the recess 42 in which an end portion 81 of the manually operated switch 21 is engaged. The coupling rod 60 is moreover formed with a groove 41 in which an end 80 of the movable core 51 of the electromagnet 16 is engaged, said end portion also operating as a stop element, with respect to the forces provided by the springs 36, 38 and 39. Figure 5.a further shows the second switch 22 in a coupled circuit condition.

In an impact condition, the inertial switch suitably coupled to the input 17, conveying a ground signal to the electromagnet 16, will be actuated.

Thus, the electromagnet 16 will draw the movable core 51 thereof, thereby disengaging said coupling rod 60 which will be driven in the direction of the arrow "F" to assume the configuration shown in Figure 5.b.

With this configuration, the first contact 3 will be removed or separated from the first circuit portion 15, thereby switching-off the power supply of the main electric system of the vehicle.

The coupling rod 60, in particular, will be held in this position by a portion of the recess 42 engaging with the end portion 81 of the manually operated switch 21.

By manually operating said switch, the recess 42 will be further disengaged from the coupling rod 60, thereby allowing said coupling rod 60 to be further driven as urged by the spring 36, to cause the contact 4 to be separated from the respective second circuit portion 16 power supplying the privilege loads.

Thus, by operating the switch 21, the battery will be prevented from discharging, in a prolonged standby situation.

Preferably, the first contact 3 is separated under the operation of the spring 39 of an edge 37, rigid with said rod 60, whereas the second contact 4 is separated, preferably, by the operation of the spring 38 of an edge 40 also rigid with the rod 60.

The switch 21 can also be used for switching-off the battery by a single operation, since said switch is provided with a fork element 50 engaging with the movable core 51 of the electromagnet, thereby allowing to simultaneously disengage the groove 41 and recess 42.

By using the second switch 22, the coupling rod 60 can be caused to return both to the position thereof in which only the second contact 4 will close the corresponding second circuit portion 16 and to the position thereof in which the circuit will be fully closed.

## Claims

1. An electromechanic device for sectioning the power supply lines coming from the battery of a motor vehicle, characterized in that said device comprises at least a first contact adapted to close a first electric circuit portion supplying the main electric system of said motor vehicle, and a second contact, adapted to close a second circuit portion supplying the privileged loads of said motor vehicle, said device being further provided with means for opening said first contact to exclusively select said privileged loads.

2. A device according to Claim 1, characterized in that said first and second contacts are coupled to a coupling rod, which can be axially driven by a plurality of springs and being provided with separating means for separating said contact from their respective power supply circuit portions, said coupling rod being provided with holding means for holding said contacts in the closure position of said circuit.

3. A device according to Claim 2, characterized in that said separating means for separating said contacts from said circuit portions comprise a first and second edges, rigid with said coupling rod and adapted to engage with the first and second contacts, upon driving said coupling rod.

4. A device according to Claim 2, characterized in that said holding means for holding at least one of said contacts in the closure position thereof comprise a groove in which an end portion of a movable core of an electromagnet is engaged, as well as a recess, in which an end portion of a manually operated switch is engaged.

5. A device according to one or more of the preceding claims, characterized in that said means for opening said first contact for exclusively selecting said privileged loads comprise means for disengaging said end portion of said movable core from said groove, to allow said coupling rod to be driven as urged by at least a spring of said plurality of springs, and means for stopping the driving of said coupling rod before disengaging said second contact from said second circuit portion.

6. A device according to Claim 5, characterized in that said means for disengaging said movable core from said groove are responsive to an outer inertial switch which, upon an accidental impact, will allow said electromagnet to be actuated for drawing said movable core.

7. A device according to Claim 5, characterized in that said means for stopping said coupling rod driving comprise a recess portion engaging with an end portion of said manually operated switch.

8. A device according to one or more of Claims 5 to 7, characterized in that said first manually operated switch can be operated in order to disengage its end portion from said recess, to allow said coupling rod to be further driven under the urging force of at least a plurality of springs, for causing said second contact to be separated from said second circuit portion.

9. A device according to Claim 8, characterized in that said first manually operated switch comprises a fork element engaging with said electromagnet movable core for sectioning the motor vehicle battery from the motor vehicle electric system by a single operation.

10. A device according to one or more of the preceding claims, characterized in that said device further comprises a second manually operated switch for recovering said second and/or said first contact to a closure position of said second and/or first circuit portion.

11. A device according to one or more of the preceding claims, characterized in that said first and second circuit portions comprise protecting fuse for protecting against shorts.

12. A device according to one or more of the preceding claims, characterized in that said device is directly mounted on said battery, without any coupling cables, said device including a clamp for engagement a position post of said battery.

13. A device according to one or more of the preceding claims, characterized in that, in an input event, no cable portion is held under voltage, with the exception of the cables of the privileged services.
